# DEMANDE DE BREVET EUROPEEN

(11) **EP 0 773 060 A1**
(43) Date de publication de la demande: **14.05.1997**
(21) Numéro de dépôt: 96402399.8
(22) Date de dépôt: 12.11.1996
(51) Int. Cl.: B01J 3/00

(54) **Chambre à vide**

(30) Priorité: 13.11.1995 FR 9513386
(71) Demandeur: AEROSPATIALE SOCIETE NATIONALE INDUSTRIELLE, 75016 Paris (FR)
(72) Inventeur: Reix, Jean-Michel, 06210 Mandelieu (FR); Cina, Georges, 06210 Mandelieu (FR); Mouremble, Yves Jean-François, 06400 Cannes (FR)
(74) Mandataire: Bonnetat, Christian

(57) **Abrégé**

La présente invention concerne une chambre à vide destinée à recevoir un objet devant subir des essais, par exemple un satellite, et comportant un corps cylindrique (1A).

Selon l'invention, ledit corps cylindrique (1A) comprend :
- une partie inférieure fixe (2) sous forme d'une gouttière ; et
- une partie supérieure mobile (3) également sous forme d'une gouttière, susceptible :
   . d'une part, d'être reliée de façon étanche à ladite partie inférieure fixe (2), lesdites parties inférieure et supérieure (2, 3) étant reliées ensemble suivant un plan de jonction (P) longitudinal par rapport audit corps cylindrique (1A) ; et
   . d'autre part, d'être écartée de la partie inférieure (2).

## Description

La présente invention concerne une chambre à vide.

Bien que non exclusivement, elle concerne plus particulièrement une chambre à vide munie notamment d'un banc d'essai et destinée à effectuer des essais sous vide, pendant la phase de réalisation ou juste avant leur mise en service, d'objets, notamment des objets spatiaux, comme par exemple des satellites.

En raison de leur coût extrêmement élevé et de leur intérêt technologique et stratégique, les satellites sont soumis à de très nombreux essais avant leur lancement et leur mise sur orbite, notamment pour vérifier leur fiabilité. A cet effet, il est en particulier nécessaire de recréer, lors de ces essais, des conditions d'environnement identiques à celles existant dans l'espace, et en particulier un vide poussé. Le vide approprié est créé dans des chambres à vide prévues à cet effet.

Une telle chambre à vide comporte généralement un corps cylindrique étanche muni au moins à l'une de ses extrémités transversalement d'une porte d'accès permettant d'introduire à l'intérieur de la chambre un satellite devant subir des essais pour le poser sur un banc d'essai prévu dans ladite chambre.

En raison notamment de la taille restreinte de la porte d'accès (limitée au diamètre du corps cylindrique) et des conditions d'accès difficiles, l'introduction et la mise en place du satellite sur le banc d'essai posent de grandes difficultés et nécessitent un travail long et contraignant et des moyens de manutention spécifiques et coûteux. De plus, le risque de détérioration du satellite est également important.

La présente invention a pour objet de remédier à ces inconvénients. Elle concerne une chambre à vide comportant un corps cylindrique, pour laquelle l'introduction et la mise en place d'un objet, notamment d'un satellite, devant subir des essais peuvent être réalisées facilement, sans utiliser de moyens de manutention spécifiques et avec des risques de détérioration fortement réduits.

A cet effet, selon l'invention, ladite chambre à vide destinée à recevoir un objet devant subir des essais et comportant un corps cylindrique, est remarquable en ce que ledit corps cylindrique comprend :
- une partie inférieure fixe sous forme d'une gouttière obturée à ses extrémités ; et
- une partie supérieure mobile également sous forme d'une gouttière obturée à ses extrémités et susceptible :
   . d'une part, d'être posée sur ladite partie inférieure fixe et d'être reliée de façon étanche à celle-ci, lesdites parties supérieure et inférieure étant reliées ensemble suivant un plan de jonction, de préférence horizontal, longitudinal par rapport audit corps cylindrique ; et
   . d'autre part, d'être écartée de la partie inférieure de manière à permettre l'accès à l'intérieur de ladite partie inférieure.

Ainsi, grâce à l'invention, l'introduction d'un objet, en particulier un satellite, dans la chambre à vide et sa mise en place sont énormément facilitées, puisque l'accès à l'intérieur de la chambre est complètement libéré après l'écartement de la partie supérieure du corps cylindrique. Par conséquent, on peut utiliser pour l'introduction, les moyens de manutention utilisés antérieurement pour approcher l'objet de la chambre. De plus, les risques de détérioration de l'objet sont fortement réduits.

Pour faciliter davantage encore l'accès à l'intérieur de la chambre, ledit plan de jonction entre les parties supérieure et inférieure est situé de façon avantageuse dans le plan du sol de la salle d'essai dans laquelle est agencée la chambre à vide, ladite partie inférieure étant fixée au-dessous du niveau dudit sol. Ainsi, aucun élément de ladite partie inférieure ne fait saillie au-delà du niveau du sol et les opérations dans la salle d'essai ne sont donc nullement entravées par la chambre à vide.

En outre, avantageusement, la partie inférieure fixe comporte à son bord périphérique supérieur une bride périphérique agencée dans le plan de jonction, munie de joints d'étanchéité, par exemple des joints toriques et/ou des joints à lèvres et/ou des joints gonflables, et destinée à recevoir la partie supérieure mobile.

Par ailleurs, la partie supérieure comporte des hublots et la partie inférieure des ouvertures de passage pour les liaisons de raccordement à des équipements d'essai montés dans la chambre à vide. Ainsi, le déplacement de la partie supérieure n'est gêné par aucun organe, ou câble, de liaison.

Avantageusement, lesdites ouvertures de passage peuvent être fermées au moyen de tampons d'obturation étanches amovibles, lorsqu'elles ne sont pas utilisées pour le raccordement.

De plus, la partie supérieure comporte une porte susceptible d'être fermée de façon étanche et permettant l'accès d'une personne à l'intérieur de la chambre à vide. Ainsi, on peut accéder dans la chambre sans avoir à déplacer la partie supérieure du corps cylindrique.

De préférence, lorsque la chambre à vide comporte un banc d'essai plan, destiné à recevoir ledit objet devant subir des essais, la surface supérieure dudit banc d'essai est située dans ledit plan de jonction, ce qui facilite la mise en place de l'objet. Dans ce cas, on peut de plus prévoir avantageusement une passerelle repliable susceptible d'être montée entre le sol de la salle d'essai et le banc d'essai.

Dans un mode de réalisation particulièrement avantageux de l'invention, la partie inférieure sert au moins partiellement de paroi intermédiaire entre la salle d'essai située au-dessus d'elle et une salle annexe située au-dessous d'elle, dans laquelle peuvent par exemple être agencés des moyens d'alimentation, de commande et/ou de contrôle des équipements d'essai prévus dans la chambre à vide.

Par ailleurs, avantageusement, la partie supérieure peut être amenée dans une position extrême supérieure située hors de la zone de travail de ladite salle d'essai, de manière à ne pas gêner les opérations effectuées dans ladite salle d'essai.

Dans ladite position extrême supérieure, la partie supérieure peut être maintenue par des moyens de retenue appropriés, ce qui permet de soulager les moyens destinés au déplacement de la partie supérieure.

De préférence, ledit corps cylindrique est réalisé en acier inoxydable poli, ce qui permet d'éviter ou tout au moins de réduire la rétention et la génération de poussière.

Les figures du dessin annexé feront bien comprendre comment l'invention peut être réalisée. Sur ces figures, des références identiques désignent des éléments semblables.

La figure 1 est une vue latérale schématique d'une chambre à vide conforme à l'invention.

La figure 2 montre schématiquement la chambre à vide conforme à l'invention agencée dans une salle d'essai, en position fermée.

La figure 3 montre schématiquement la chambre à vide conforme à l'invention agencée dans une salle d'essai, en position ouverte.

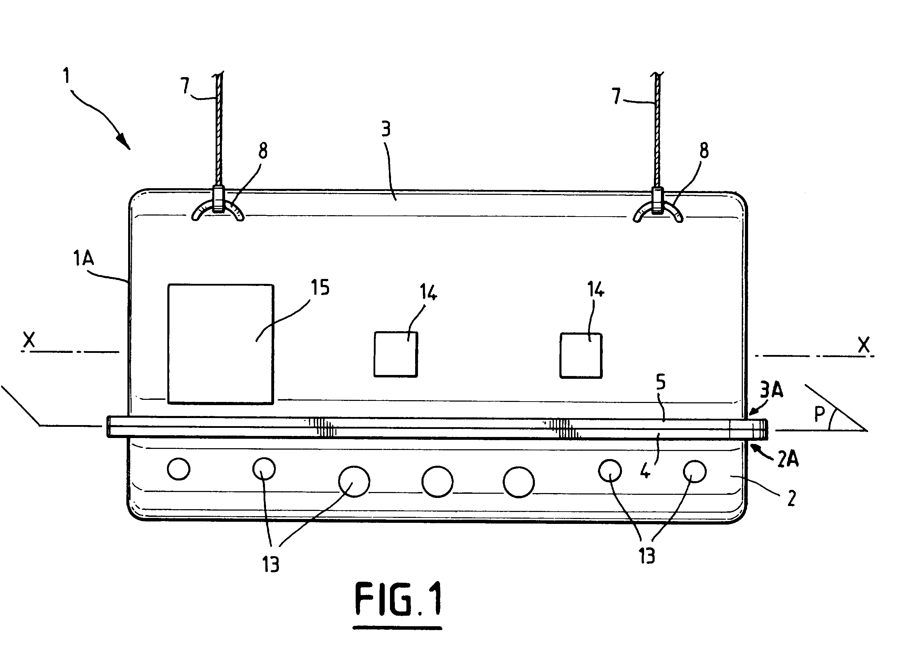

La chambre à vide 1 conforme à l'invention et représentée schématiquement sur la figure 1 est destinée à l'essai sous vide d'objets, notamment des objets spatiaux, comme par exemple des satellites.

A cet effet, on effectue généralement dans ladite chambre 1, en particulier pour des satellites, au moins des essais optiques et thermiques.

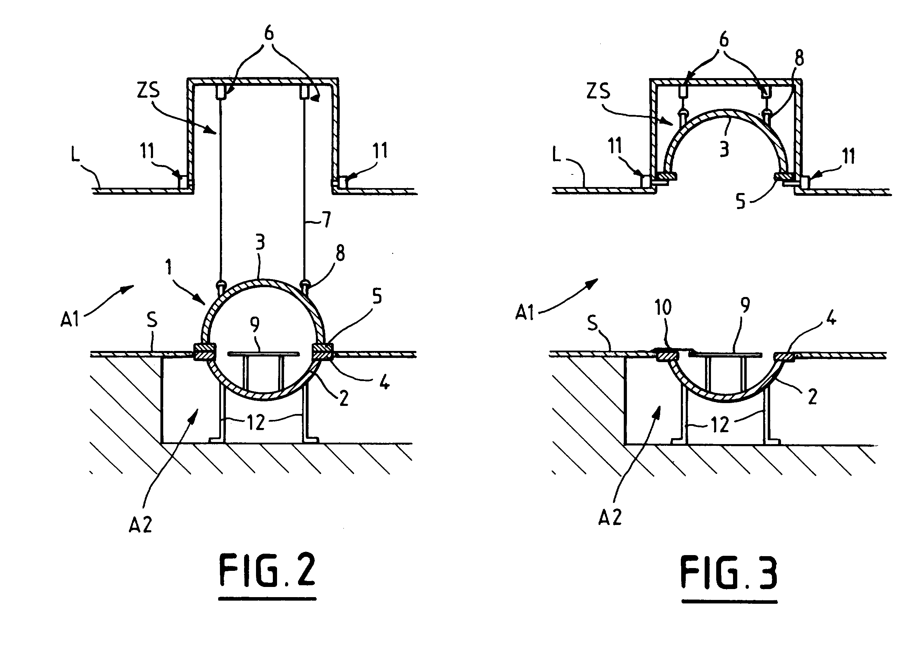

Selon l'invention, ladite chambre à vide 1 présentant un corps cylindrique 1A d'axe X-X comporte :
- une partie inférieure 2 fixe sous forme d'une gouttière fermée à ses extrémités ; et
- une partie supérieure 3 mobile également sous forme d'une gouttière fermée à ses extrémités et susceptible :
   . d'une part, d'être posée sur ladite partie inférieure fixe 2 et d'être reliée de façon étanche à celle-ci, tel que représenté schématiquement sur les figures 1 et 2, lesdites parties 2 et 3 étant reliées ensemble suivant un plan de jonction horizontal P longitudinal par rapport audit corps cylindrique 1A ; et
   . d'autre part, d'être écartée de la partie inférieure 2 de manière à permettre l'accès à l'intérieur de ladite partie inférieure 2, tel que représenté schématiquement sur la figure 3.

Comme on peut le voir sur la figure 1, le plan de jonction P est situé au-dessous de l'axe X-X de sorte que la partie inférieure 2 est plus petite que la partie supérieure 3. Une telle réalisation permet notamment d'obtenir un volume plus important pour effectuer les essais, tel que précisé ci-après.

La partie inférieure 2 est munie à son bord périphérique supérieur 2A d'une bride périphérique 4 destinée à recevoir, dans la position fermée des figures 1 et 2, une bride périphérique coopérante 5 prévue sur le bord périphérique inférieur 3A de la partie supérieure 3.

Le plan de jonction P se trouve dans le plan de contact desdites brides 4 et 5.

Afin d'assurer l'étanchéité entre les deux parties 2 et 3 dans la position fermée, au moins la bride 4 comporte des joints à lèvres et/ou des joints toriques et/ou des joints gonflables non représentés, qui sont écrasés dans cette position, (uniquement) par le poids de la partie supérieure 3.

La chambre à vide 1 ne nécessite donc pas de moyens de verrouillage spécifiques pour réaliser la solidarisation et l'étanchéité entre les deux parties 2 et 3.

Toutefois, dans le cadre de la présente invention, on peut bien entendu également prévoir un autre mode de réalisation non représenté comportant des moyens auxiliaires spécifiques pour relier ensemble lesdites parties 2 et 3.

Ladite partie supérieure 3 peut être levée par un système de levage 6 comportant des câbles 7 fixés par l'intermédiaire de moyens de fixation 8 sur la périphérie externe supérieure de ladite partie 3.

Bien entendu, dans le cadre de la présente invention, on peut utiliser d'autres systèmes de levage et d'autres moyens de fixation.

Ainsi, pour introduire (ou ressortir) un objet non représenté devant subir des essais dans (ou de) la chambre à vide 1, on déclenche ledit système de levage 6 qui lève la partie supérieure 3 de manière à libérer complètement l'accès à l'intérieur de la chambre 1. Ledit objet peut alors être introduit facilement dans la chambre 1 et être posé sur un banc d'essai 9 agencé dans la partie inférieure 2.

Grâce à l'invention, il n'est pas nécessaire de prévoir des moyens spécifiques coûteux pour effectuer ces différentes manoeuvres d'introduction et de mise en place.

De façon connue, ledit banc d'essai 9 est muni d'équipements de mesure et d'essai non représentés. Dans un mode de réalisation particulier non représenté, il peut comporter des pieds qui traversent la partie inférieure 2 et prennent appui sur un support approprié.

En outre, dans un mode de réalisation particulièrement avantageux de l'invention représenté sur les figures 2 et 3, le plan de jonction P est situé dans le plan du sol S d'une salle d'essai A1 dans laquelle est agencée la chambre 1. Ainsi, l'accès à l'intérieur de la chambre 1 est facilité davantage encore, puisque, dans la position ouverte de la figure 3, aucun élément de la partie inférieure 2 ne fait saillie au-delà du sol S.

Dans le même but de faciliter l'accès, on prévoit une passerelle amovible 10 entre ledit banc d'essai 9 et ledit sol S de la salle d'essai A1. Cette passerelle 10 prend directement appui sur le sol S sans venir au contact de la bride 4 de la partie fixe 2, ce qui permet de protéger ladite bride 4.

La salle d'essai A1 comporte en outre dans le plafond L une zone de stockage ZS pour la partie supérieure 3, dans la position ouverte de la figure 3. Lorsqu'elle est agencée dans cette zone de stockage ZS, en position stockée, ladite partie supérieure 3 libère complètement la salle d'essai A1.

Ladite zone de stockage ZS est pourvue de moyens de retenue 11 permettant de maintenir la partie supérieure 3 dans la position stockée et ainsi de soulager le système de levage 6.

Dans l'exemple représenté, lesdits moyens de retenue 11 sont réalisés sous forme d'appuis mobiles susceptibles de prendre :
- soit une position écartée représentée sur la figure 2 et permettant le déplacement vertical de la partie supérieure 3 ;
- soit une position rapprochée représentée sur la figure 3 et permettant de maintenir ladite partie supérieure 3.

Bien entendu, on peut prévoir d'autres moyens de retenue dans le cadre de la présente invention.

Par ailleurs, comme on peut le voir sur les figures 2 et 3, la partie inférieure fixe 2 sert de plus de paroi intermédiaire entre la salle d'essai A1 et une salle annexe A2. A cet effet, ladite partie inférieure 2 est maintenue par des pieds 12 prenant appui sur le sol de ladite salle annexe A2 et formés de manière à libérer le maximum de volume dans cette salle A2.

Ladite salle annexe A2 peut servir de salle des machines dans laquelle sont notamment agencés les moyens de commande et d'alimentation non représentés des équipements d'essai prévus dans la chambre 1. Pour permettre le raccordement entre lesdits moyens et lesdits équipements, des ouvertures 13 sont prévues dans ladite partie inférieure 2.

Les moyens de raccordement non représentés utilisés à cet effet, par exemple des câbles électriques montés le cas échéant dans une enveloppe tubulaire, doivent évidemment traverser de façon étanche lesdites ouvertures 13.

Les ouvertures 13 qui ne sont pas utilisées pour de tels raccordements sont fermées de façon étanche au moyen de tampons d'obturation amovibles également non représentés.

La partie supérieure 3 quant à elle comporte des hublots 14 permettant de voir à l'intérieur de la chambre 1, ainsi qu'une porte 15 permettant l'accès d'une personne dans la chambre sans avoir à lever la partie supérieure 3. Bien entendu, ces hublots 14 et cette porte 15 sont fermés de façon étanche lors des essais.

## Revendications

1. Chambre à vide destinée à recevoir un objet devant subir des essais et comportant un corps cylindrique (1A),
caractérisée en ce que ledit corps cylindrique (1A) comprend :
- une partie inférieure fixe (2) sous forme d'une gouttière obturée à ses extrémités ; et
- une partie supérieure mobile (3) également sous forme d'une gouttière obturée à ses extrémités et susceptible :
. d'une part, d'être posée sur ladite partie inférieure fixe (2) et d'être reliée de façon étanche à celle-ci, lesdites parties inférieure et supérieure (2, 3) étant reliées ensemble suivant un plan de jonction (P) longitudinal par rapport audit corps cylindrique (1A) ; et
. d'autre part, d'être écartée de la partie inférieure (2) de manière à permettre l'accès à l'intérieur de ladite partie inférieure (2).

2. Chambre à vide selon la revendication 1, ladite chambre à vide (1) étant située dans une salle d'essai (A1),
caractérisée en ce que ledit plan de jonction (P) est situé dans le plan du sol (S) de la salle d'essai (A1), la partie inférieure (2) étant fixée au-dessous du niveau dudit sol (S).

3. Chambre à vide selon l'une des revendications 1 ou 2,
caractérisée en ce que ledit plan de jonction (P) est horizontal.

4. Chambre à vide selon l'une quelconque des revendications 1 à 3,
caractérisée en ce que la partie inférieure fixe (2) comporte à son bord périphérique supérieur (2A) une bride périphérique (4) agencée dans le plan de jonction (P), munie de joints d'étanchéité et destinée à recevoir la partie supérieure mobile (3).

5. Chambre à vide selon la revendication 4,
caractérisée en ce qu'au moins certains desdits joints d'étanchéité sont des joints toriques.

6. Chambre à vide selon l'une des revendications 4 ou 5,
caractérisée en ce qu'au moins certains desdits joints d'étanchéité sont des joints à lèvres.

7. Chambre à vide selon l'une quelconque des revendications 4 à 6,
caractérisée en ce qu'au moins certains desdits joints d'étanchéité sont des joints gonflables.

8. Chambre à vide selon l'une quelconque des revendications précédentes,
caractérisée en ce que la partie supérieure (3) comporte des hublots (14) et la partie inférieure (2) des ouvertures de passage (13) pour les liaisons de raccordement à des équipements d'essai montés dans la chambre à vide (1).

9. Chambre à vide selon la revendication 8,
caractérisée en ce que lesdites ouvertures de passage (13) sont susceptibles d'être fermées au moyen de tampons d'obturation étanches amovibles.

10. Chambre à vide selon l'une quelconque des revendications précédentes,
caractérisée en ce que la partie supérieure (3) comporte une porte (15) susceptible d'être fermée de façon étanche et permettant l'accès d'une personne à l'intérieur de la chambre à vide (1).

11. Chambre à vide selon l'une quelconque des revendications précédentes, ladite chambre à vide (1) comportant un banc d'essai plan (9) destiné à recevoir ledit objet devant subir des essais,
caractérisée en ce que la surface supérieure dudit banc d'essai (9) est située dans ledit plan de jonction (P).

12. Chambre à vide selon la revendication 11,
caractérisée en ce qu'elle comporte une passerelle repliable (10) susceptible d'être montée entre le sol (S) de la salle d'essai (A1) et le banc d'essai (9).

13. Chambre à vide selon l'une quelconque des revendications 2 à 12,
caractérisée en ce que la partie inférieure (2) sert au moins partiellement de paroi intermédiaire entre la salle d'essai (A1) située au-dessus d'elle et une salle annexe (A2) située au-dessous d'elle.

14. Chambre à vide selon l'une quelconque des revendications 2 à 13,
caractérisée en ce que la partie supérieure (3) est susceptible d'être amenée dans une position extrême supérieure située hors de la zone de travail de ladite salle d'essai (A1).

15. Chambre à vide selon la revendication 14,
caractérisée en ce que, dans ladite position extrême supérieure, la partie supérieure (3) est maintenue par des moyens de retenue (11).

16. Chambre à vide selon l'une quelconque des revendications précédentes,
caractérisée en ce que ledit corps cylindrique (1A) est réalisé en acier inoxydable.
